# EUROPEAN PATENT APPLICATION

(11) **EP 4 797 744 A1**
(43) Date of publication of application: **26.08.2026**
(21) Application number: 24892905.1
(22) Date of filing: 12.08.2024
(51) Int. Cl.: H04W 8/14

(54) **INFORMATION FORWARDING METHOD AND APPARATUS**

(30) Priority: 22.11.2023 CN 202311582536
(71) Applicant: HUAWEI TECHNOLOGIES CO., LTD., Shenzhen, Guangdong 518129 (CN)
(72) Inventor: XU, Shengfeng, Shenzhen, Guangdong 518129 (CN)
(74) Representative: Isarpatent
(86) International application number: PCT/CN2024/111539
(87) International publication number: WO 2025/107742

(57) **Abstract**

This application provides an information forwarding method and an apparatus. In the method, a network element, for example, a non-access stratum routing function network element, whose function is to forward a non-access stratum message is defined in a network. The non-access stratum message may be transparently transmitted by a radio access network device to the non-access stratum routing function network element, and is further forwarded by the non-access stratum routing function network element, so that forwarding of the non-access stratum message no longer depends on the radio access network device or an access and mobility management function network element, and the non-access stratum message is decoupled from the radio access network device or the access and mobility management function network element. Therefore, a network architecture can be more flexible and can meet various service requirements in future network architectures. In addition, because the forwarding of the non-access stratum message no longer depends on the radio access network device or the access and mobility management function network element, load of the radio access network device or the access and mobility management function network element can be further reduced, thereby improving operation efficiency of the radio access network device or the access and mobility management function network element.

## Description

This application claims priority to Chinese Patent Application No. 202311582536.4, filed with the China National Intellectual Property Administration on November 22, 2023 and entitled "INFORMATION FORWARDING METHOD AND APPARATUS", which is incorporated herein by reference in its entirety.

### TECHNICAL FIELD

This application relates to the field of communication technologies, and in particular, to an information forwarding method and an apparatus.

### BACKGROUND

In a 5G system, 3GPP defines non-access stratum (non-access stratum, NAS) signaling, and the NAS signaling is signaling used for communication between a user equipment and a core network element.

In an implementation, the NAS signaling is forwarded by an access and mobility management function (access and mobility management function, AMF) network element. In another implementation, the NAS signaling is directly forwarded by a radio access network (radio access network, RAN) device.

However, the foregoing two manners are not applicable to future network architectures.

### SUMMARY

Embodiments of this application provide an information forwarding method and an apparatus, allowing NAS signaling forwarding to be applicable to future network architectures.

To achieve the foregoing objective, the following technical solutions are used in this application:
According to a first aspect, an information forwarding method is provided. The method includes: A radio access network device receives an access network message from a terminal, where the access network message includes a first non-access stratum message, and the first non-access stratum message is used by the terminal to request to register with a first network. The radio access network device sends the first non-access stratum message to a first non-access stratum routing function network element, where the first non-access stratum routing function network element is different from an access and mobility management function network element, and is configured to forward the first non-access stratum message to the access and mobility management function network element, and the access and mobility management function network element is responsible for processing a registration request of the terminal.

It can be learned from the method according to the first aspect that, a network element, for example, a non-access stratum routing function network element, whose function is to forward a non-access stratum message is defined in a network. The non-access stratum message may be transparently transmitted by the radio access network device to the non-access stratum routing function network element, and is further forwarded by the non-access stratum routing function network element, so that forwarding of the non-access stratum message no longer depends on the radio access network device or the access and mobility management function network element, and the non-access stratum message is decoupled from the radio access network device or the access and mobility management function network element. Therefore, a network architecture can be more flexible and can meet various service requirements in future network architectures. In addition, because the forwarding of the non-access stratum message no longer depends on the radio access network device or the access and mobility management function network element, load of the radio access network device or the access and mobility management function network element can be further reduced, thereby improving operation efficiency of the radio access network device or the access and mobility management function network element.

In a possible design solution, the access network message further includes first information, and the first information includes at least one of the following: an identifier of the first network or an identifier of a network slice of the terminal. The method according to the first aspect further includes: The radio access network device determines the first non-access stratum routing function network element based on the first information. It may be understood that the identifier of the first network and/or the identifier of the network slice of the terminal may indicate the corresponding network. Corresponding non-access stratum routing function network elements are configured in different networks. The non-access stratum routing function network element in the corresponding network may be found based on the identifier of the first network and/or the identifier of the network slice of the terminal, to avoid a forwarding error. For example, a non-access stratum message of a terminal in a network A is forwarded by a non-access stratum routing function network element in a network B, causing a forwarding error.

Optionally, a first association relationship between different non-access stratum routing function network elements and different networks is configured in the radio access network device, and the first association relationship indicates that different non-access stratum routing function network elements belong to different networks. That the radio access network device determines the first non-access stratum routing function network element based on the first information includes: The radio access network device determines, based on the identifier of the first network and the first association relationship, the first non-access stratum routing function network element associated with the first network. It may be understood that one or more non-access stratum routing function network elements are preconfigured in the radio access network device, and an identifier of the non-access stratum routing function network element and an identifier of a network to which the non-access stratum routing function network element belongs, so that the radio access network device can accurately find a non-access stratum routing function network element corresponding to a network. Alternatively, there may be another implementation, for example, the non-access stratum routing function network element is dynamically determined. This is not limited.

Optionally, a second association relationship between different non-access stratum routing function network elements and different network slices is configured in the radio access network device, and the second association relationship indicates that different non-access stratum routing function network elements belong to different network slices. That the radio access network device determines the first non-access stratum routing function network element based on the first information includes: The radio access network device determines, based on the identifier of the network slice of the terminal and the second association relationship, the first non-access stratum routing function network element associated with the network slice of the terminal. It may be understood that one or more non-access stratum routing function network elements are preconfigured in the radio access network device, and an identifier of the non-access stratum routing function network element and an identifier of a network slice to which the non-access stratum routing function network element belongs, so that the radio access network device can accurately find a non-access stratum routing function network element corresponding to the network slice. Alternatively, there may be another implementation, for example, the non-access stratum routing function network element is dynamically determined. This is not limited.

In a possible design solution, the access network message further includes first information, and the first information includes at least one of the following: an identifier of the first network or an identifier of a network slice of the terminal. The method according to the first aspect further includes: The radio access network device sends the first non-access stratum message to the first non-access stratum routing function network element based on the first information. When the network slice of the terminal is a network slice of a private network or the first network is a private network, the radio access network device sends the first non-access stratum message to the first non-access stratum routing function network element. When the network slice of the terminal is a network slice of a public network or the first network is a public network, the radio access network device sends the first non-access stratum message to the access and mobility management function network element.

It may be understood that, for different network types, an existing manner of forwarding the non-access stratum message by the access and mobility management function network element or a manner, newly defined in embodiments of this application, of forwarding the non-access stratum message by the non-access stratum routing function network element may be used, so that the manner is flexibly applicable to various actual network scenarios.

In a possible design solution, the method according to the first aspect further includes: The radio access network device determines an identifier of the access and mobility management function network element based on the first information; and the radio access network device sends the identifier of the access and mobility management function network element to the first non-access stratum routing function network element. It may be understood that the first non-access stratum routing function network element may obtain the identifier of the access and mobility management function network element via the radio access network device, that is, the first non-access stratum routing function network element may directly forward the first non-access stratum message to the access and mobility management function network element without selecting the access and mobility management function network element, thereby reducing overheads of the first non-access stratum routing function network element.

In a possible design solution, the method according to the first aspect further includes: The radio access network device receives a second non-access stratum message from the terminal, where the second non-access stratum message is a non-access stratum message related to a service of the terminal; and the radio access network device sends the second non-access stratum message to the first non-access stratum routing function network element. The second non-access stratum message includes at least one of the following: a mobility management non-access stratum message, a session management non-access stratum message, or a location service non-access stratum message.

It may be understood that the non-access stratum routing function network element may not only forward the non-access stratum message used for registration, but also forward the non-access stratum message related to the service.

According to a second aspect, an information forwarding method is provided. The method includes: A first non-access stratum routing function network element receives a first non-access stratum message from a radio access network device, where the first non-access stratum message is used by a terminal to request to register with a first network, the first non-access stratum routing function network element is different from an access and mobility management function network element, and the access and mobility management function network element is responsible for processing a registration request of the terminal. The first non-access stratum routing function network element sends the first non-access stratum message to the access and mobility management function network element based on a type of the first non-access stratum message.

It can be seen that, a non-access stratum routing function network element may be configured to identify a type of a non-access stratum message, so that different types of non-access stratum messages may be forwarded to different service management function network elements.

Optionally, that the first non-access stratum routing function network element sends the first non-access stratum message to the access and mobility management function network element based on the type of the first non-access stratum message includes: The first non-access stratum routing function network element receives an identifier of the access and mobility management function network element from the radio access network device. The first non-access stratum routing function network element sends the first non-access stratum message to the access and mobility management function network element based on the type of the first non-access stratum message and the identifier of the access and mobility management function network element.

In a possible design solution, the method according to the second aspect further includes: The first non-access stratum routing function network element receives a second non-access stratum message from the radio access network device, where the second non-access stratum message is a non-access stratum message related to a service of the terminal. The first non-access stratum routing function network element sends the second non-access stratum message to a management function network element of the service related to the second non-access stratum message. The second non-access stratum message includes at least one of the following: a mobility management non-access stratum message, a session management non-access stratum message, or a location service non-access stratum message.

It may be understood that, for related technical effects of the method according to the second aspect, refer to the related descriptions of the first aspect. Details are not described herein again.

According to a third aspect, an information forwarding method is provided. The method includes: An access and mobility management function network element receives a first non-access stratum message from a radio access network device, where the first non-access stratum message is used by a terminal to request to register with a first network. The access and mobility management function network element sends a first message to the radio access network device in response to a registration request of the terminal, where the first message includes an identifier of a first non-access stratum routing function network element or first indication information, the first indication information indicates that a non-access stratum routing function network element needs to be selected, and the non-access stratum routing function network element is a network element that is different from the access and mobility management function network element and that is configured to forward a non-access stratum message.

It can be learned from the method according to the third aspect that, on a basis of defining the non-access stratum routing function network element, the access and mobility management function network element may trigger the non-access stratum routing function network element to forward a corresponding non-access stratum message, so that the non-access stratum message is decoupled from the radio access network device or the access and mobility management function network element.

Optionally, the first non-access stratum message includes an identifier of a network slice of the terminal. That the access and mobility management function network element sends the first message to the radio access network device in response to the registration request of the terminal further includes: sending the first message to the radio access network device when the network slice of the terminal is a network slice of a private network; and/or sending the first message to the radio access network device when a location corresponding to location information of the terminal is in a private network area. It may be understood that, for different network types, an existing manner of forwarding the non-access stratum message or a manner, newly defined in embodiments of this application, of forwarding the non-access stratum message by the non-access stratum routing function network element may be used, so that the manner is flexibly applicable to various actual network scenarios.

In a possible design solution, the first message further includes an identifier of the terminal. The method according to the third aspect further includes: The access and mobility management function network element receives a second message from the first non-access stratum routing function network element, where the second message includes the identifier of the terminal, and the identifier of the terminal indicates that the first non-access stratum routing function network element is associated with the terminal and/or the access and mobility management function network element is associated with the terminal. It may be understood that the access and mobility management function network element may associate the first non-access stratum routing function network element and the access and mobility management function network element with the terminal by using the identifier of the terminal. In an association case, the access and mobility management function network element and another service management function network element may process, in the forwarding manner defined in embodiments of this application, a non-access stratum message subsequently sent by the terminal, that is, forward, via the first non-access stratum routing function network element, the non-access stratum message subsequently sent by the terminal.

In a possible design solution, when the first message includes an identifier of the first non-access stratum routing function network element, the method according to the third aspect further includes: The access and mobility management function network element determines the identifier of the first non-access stratum routing function network element based on an identifier of a network slice of the terminal. It may be understood that the radio access network device may obtain the identifier of the first non-access stratum routing function network element via the access and mobility management function network element. In other words, the radio access network device may directly send a message to the first non-access stratum routing function network element without selecting a non-access stratum routing function network element, thereby reducing overheads of the radio access network device.

According to a fourth aspect, an information forwarding method is provided. The method includes: A radio access network device receives a first message from an access and mobility management function network element, where the first message includes an identifier of a first non-access stratum routing function network element or first indication information, the first indication information indicates that a non-access stratum routing function network element needs to be selected, the non-access stratum routing function network element is configured to forward a non-access stratum message, and the access and mobility management function network element is responsible for registration or access management of a terminal. The radio access network device sends a second message to the first non-access stratum routing function network element based on the identifier of the first non-access stratum routing function network element, or the radio access network device sends the second message to a second non-access stratum routing function network element based on the first indication information, where the second message includes an identifier of the access and mobility management function network element and/or an identifier of the terminal, and the identifier of the terminal indicates that the non-access stratum routing function network element is associated with the terminal and/or the access and mobility management function network element is associated with the terminal.

In a possible design solution, the method according to the fourth aspect further includes: When the first message includes the first indication information, the radio access network device determines the second non-access stratum routing function network element.

Optionally, when the second message includes the identifier of the terminal, the first message further includes the identifier of the terminal.

In a possible design solution, the method according to the fourth aspect further includes: The radio access network device receives a second non-access stratum message from the terminal, where the second non-access stratum message is a non-access stratum message related to a service of the terminal. The radio access network device sends the second non-access stratum message to the first non-access stratum routing function network element. The second non-access stratum message includes at least one of the following: a mobility management non-access stratum message, a session management non-access stratum message, or a location service non-access stratum message.

It may be understood that, for related technical effects of the method according to the fourth aspect, refer to the related descriptions of the third aspect. Details are not described herein again.

According to a fifth aspect, a communication apparatus is provided. The communication apparatus includes a module configured to perform the method according to any one of the first aspect to the fourth aspect, for example, a transceiver module and a processing module. For example, the transceiver module indicates a transceiver function of the communication apparatus, and the processing module is configured to perform a function other than the transceiver function of the communication apparatus.

Optionally, the transceiver module may include a sending module and a receiving module. The sending module is configured to implement a sending function of the communication apparatus according to the fifth aspect, and the receiving module is configured to implement a receiving function of the communication apparatus according to the fifth aspect.

Optionally, the communication apparatus according to the fifth aspect may further include a storage module, and the storage module stores a program or instructions. When the processing module executes the program or the instructions, the communication apparatus is enabled to perform the method according to any one of the first aspect to the fourth aspect.

It may be understood that the communication apparatus according to the fifth aspect may be a terminal or a network device, may be a chip (system) or another part or component that may be disposed in a terminal or a network device, or may be an apparatus that includes a terminal or a network device. This is not limited in this application.

In addition, for technical effects of the communication apparatus according to the fifth aspect, refer to the technical effects of the first aspect. Details are not described herein again.

According to a sixth aspect, a communication apparatus is provided. The communication apparatus includes a processor, and the processor is configured to perform the method according to any one of the first aspect to the fourth aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include a memory. The memory and the processor may be integrated together, or may be disposed separately. The memory may be configured to store a computer program and/or data in the method according to any one of the first aspect to the fourth aspect.

In embodiments of this application, the communication apparatus according to the sixth aspect may be the terminal or the network device according to any one of the first aspect to the fourth aspect, a chip (system) or another part or component that may be disposed in the terminal or the network device, or an apparatus that includes the terminal or the network device.

In addition, for technical effects of the communication apparatus according to the sixth aspect, refer to the technical effects of the method according to any one of the first aspect to the fourth aspect. Details are not described herein again.

According to a seventh aspect, a communication apparatus is provided. The communication apparatus includes a processor. The processor is coupled to a memory. The processor is configured to execute a computer program stored in the memory, to cause the communication apparatus to perform the method according to any one of the first aspect to the seventh aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In embodiments of this application, the communication apparatus according to the seventh aspect may be the terminal or the network device according to any one of the first aspect to the seventh aspect, a chip (system) or another part or component that may be disposed in the terminal or the network device, or an apparatus that includes the terminal or the network device.

In addition, for technical effects of the communication apparatus according to the seventh aspect, refer to the technical effects of the method according to the first aspect. Details are not described herein.

According to an eighth aspect, a communication apparatus is provided, and includes a processor and a memory. The memory is configured to store a computer program, and when the processor executes the computer program, the communication apparatus is caused to perform the method according to any one of the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In embodiments of this application, the communication apparatus according to the eighth aspect may be the terminal or the network device according to any one of the first aspect to the fourth aspect, a chip (system) or another part or component that may be disposed in the terminal or the network device, or an apparatus that includes the terminal or the network device.

In addition, for technical effects of the communication apparatus according to the eighth aspect, refer to the technical effects of the method according to any one of the first aspect to the fourth aspect. Details are not described herein again.

According to a ninth aspect, a communication system is provided. The communication system includes at least one of the following: a radio access network device configured to perform the method according to the first aspect, a first non-access stratum routing function network element configured to perform the method according to the second aspect, an access and mobility management function network element configured to perform the method according to the third aspect, and a radio access network device configured to perform the method according to the fourth aspect.

According to a tenth aspect, a computer-readable storage medium is provided, and includes a computer program or instructions. When the computer program or the instructions are run on a computer, the computer is caused to perform the method according to any one of the first aspect to the fourth aspect.

According to an eleventh aspect, a computer program product is provided, and includes a computer program or instructions. When the computer program or the instructions are run on a computer, the computer is caused to perform the method according to any one of the first aspect to the fourth aspect.

### BRIEF DESCRIPTION OF DRAWINGS

FIG. 1 is a diagram of an architecture of a 5GS;
FIG. 2 is a schematic flowchart of NAS transmission;
FIG. 3 is a diagram of an architecture of forwarding an NAS by an AMF in a 5G network;
FIG. 4 is a diagram of a network architecture in which a RAN is connected to network elements in a distributed manner;
FIG. 5 is a schematic flowchart of distributed NAS transmission;
FIG. 6 is a diagram 1 of an architecture of a communication system according to an embodiment of this application;
FIG. 7 is a diagram 2 of an architecture of a communication system according to an embodiment of this application;
FIG. 8 is a schematic flowchart 1 of an information forwarding method according to an embodiment of this application;
FIG. 9 is a schematic flowchart 2 of an information forwarding method according to an embodiment of this application;
FIG. 10 is a diagram 1 of a structure of a communication apparatus according to an embodiment of this application; and
FIG. 11 is a diagram 2 of a structure of a communication apparatus according to an embodiment of this application.

### DESCRIPTION OF EMBODIMENTS

For ease of understanding, the following first describes technical terms in embodiments of this application.

### 1. 5th generation (5th generation, 5G) mobile communication system (referred to as a 5G system (5G system, 5GS) for short)

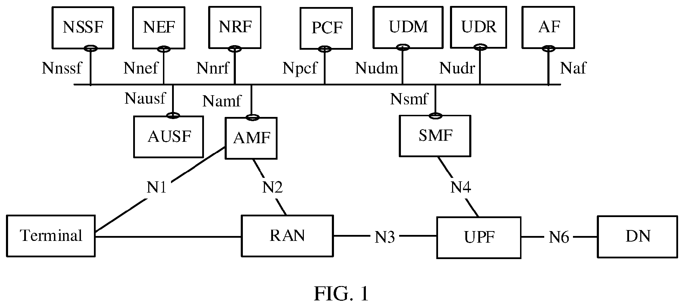

FIG. 1 is a diagram of an architecture of the 5GS. As shown in FIG. 1, the 5GS includes an access network (access network, AN) and a core network (core network, CN), and may further include a terminal.

There may be one or more terminals, for example, a first terminal, a second terminal, and a third terminal. The terminal may be a terminal having receiving and sending functions, or may be a chip or a chip system disposed in the terminal. The terminal may also be referred to as a user equipment (user equipment, UE), an access terminal, a subscriber unit (subscriber unit), a subscriber station, a mobile station (mobile station, MS), a remote station, a remote terminal, a mobile device, a user terminal, a terminal, a wireless communication device, a user agent, or a user apparatus. The terminal in embodiments of this application may be a mobile phone (mobile phone), a cellular phone (cellular phone), a smart phone (smart phone), a tablet computer (Pad), a wireless data card, a personal digital assistant (personal digital assistant, PDA) computer, a wireless modem (modem), a handheld device (handset), a laptop computer (laptop computer), a machine type communication (machine type communication, MTC) terminal, a computer having wireless receiving and sending functions, a virtual reality (virtual reality, VR) terminal, an augmented reality (augmented reality, AR) terminal, a smart home device (for example, a refrigerator, a television, an air conditioner, or a meter), a smart robot, a robot arm, a workshop device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), a vehicle-mounted terminal, a road side unit (road side unit, RSU) or the like having a terminal function, a flight device (for example, a smart robot, a hot air balloon, an uncrewed aerial vehicle, or an aircraft), or the like. The terminal in this application may alternatively be a vehicle-mounted module, a vehicle-mounted assembly, a vehicle-mounted component, a vehicle-mounted chip, or a vehicle-mounted unit that is disposed in a vehicle as one or more components or units. The terminal device may alternatively be another device having a terminal function. For example, the terminal device may alternatively be a device that functions as a terminal in D2D communication.

A device form of the terminal is not limited in embodiments of this application. An apparatus configured to implement a function of the terminal device may be a terminal device, or may be an apparatus, for example, a chip system, that can support the terminal device in implementing the function. The apparatus may be installed in the terminal device or used in cooperation with the terminal device. In embodiments of this application, the chip system may include a chip, or may include a chip and another discrete component.

The foregoing AN is for implementing an access-related function, may provide a network access function for an authorized user in a specific area, and can determine transmission links with different quality based on a user level, a service requirement, and the like, to perform transmission of user data. The AN forwards a control signal and the user data between the terminal and the CN. The AN may include an access network device, or may be referred to as a radio access network (radio access network, RAN) device. The CN is mainly responsible for maintaining subscription data of a mobile network, and provides session management, mobility management, policy management, security authentication, and other functions for the terminal. The CN mainly includes the following network elements: a user plane function (user plane function, UPF) network element, an authentication server function (authentication server function, AUSF) network element, an AMF network element, a session management function (session management function, SMF) network element, a network slice selection function (network slice selection function, NSSF) network element, a network exposure function (network exposure function, NEF) network element, a network function repository function (NF repository function, NRF) network element, a policy control function (policy control function, PCF) network element, a unified data management (unified data management, UDM) network element, a unified data repository (unified data repository, UDR) network element, and an application function (application function, AF) network element.

There may be one or more RAN devices, that is, access network apparatuses. The access network apparatus may be a device having wireless receiving and sending functions, or may be a chip or a chip system disposed in the device, and is located in an access network (access network, AN) of the communication system, to provide an access service for the terminal. For example, the access network apparatus may be referred to as a radio access network (radio access network, RAN) device, and may be specifically an access network device in a next-generation mobile communication system, for example, a 6G access network device like a 6G base station. Alternatively, in the next-generation mobile communication system, the access network apparatus may be named in another manner, which falls within the protection scope of embodiments of this application. This is not limited in this application. Alternatively, the access network apparatus may include a gNB in 5G, for example, a new radio (new radio, NR) system, may include one or a group of antenna panels (including a plurality of antenna panels) of a base station in 5G, or may be a network node that forms a gNB, a transmission point (transmission and reception point, TRP, or transmission point, TP), or a transmission measurement function (transmission measurement function, TMF), for example, a central unit (central unit, CU), a distributed unit (distributed unit, DU), a CU-control plane (control plane, CP), or a CU-user plane (user plane, UP), a radio unit (radio unit, RU), an RSU having a base station function, a wired access gateway, or a 5G core network element. Alternatively, the access network apparatus may further include an access point (access point, AP) in a wireless fidelity (wireless fidelity, Wi-Fi) system, a wireless relay node, a wireless backhaul node, various forms of macro base stations, a micro base station (also referred to as a small cell), a relay station, an access point, a wearable device, a vehicle-mounted device, or the like. In this application, the RAN device may alternatively be an access network function (access network function) network element or a wireless access network function (wireless access network function) network element.

The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The UPF network element is mainly responsible for user data processing (forwarding, receiving, charging, and the like). For example, the UPF network element may receive user data from a data network (data network, DN), and forward the user data to the terminal via the access network device. The UPF network element may alternatively receive user data from the terminal via the access network device, and forward the user data to the DN. A DN network element is an operator network that provides a data transmission service for a user, for example, an internet protocol (internet protocol, IP) multi-media service (IP multi-media service, IMS) or an internet (internet).

The DN may be an external network of an operator, or may be a network controlled by an operator, and is configured to provide a service for the terminal device.

The AUSF network element is mainly configured to perform security authentication on the terminal.

The AMF network element is mainly for mobility management in the mobile network, for example, user location update, registration of a user with a network, and user switching.

The SMF network element is mainly for session management in the mobile network, for example, session establishment, modification, and release. A specific function is, for example, allocating an internet protocol (internet protocol, IP) address to a user, or selecting a UPF network element that provides a data packet forwarding function.

The PCF network element mainly supports providing a unified policy framework to control network behavior, and providing a policy rule for a control layer network function, and is responsible for obtaining policy decision-related subscription information of the user. The PCF network element may provide a policy like a quality of service (quality of service, QoS) policy or a slice selection policy to the AMF network element and the SMF network element.

The NSSF network element is mainly configured to select a network slice for the terminal.

The NEF network element is mainly for capability supporting and event exposure.

The UDM network element is mainly configured to store user data, for example, subscription data and authentication/authorization data.

The UDR network element is mainly configured to store structured data. Stored content includes subscription data, policy data, externally exposed structured data, and application-related data.

The AF mainly supports interaction with the CN to provide a service, for example, affecting a data routing decision-making and a policy control function, or providing some third-party services for a network side.

### 2. NAS transmission

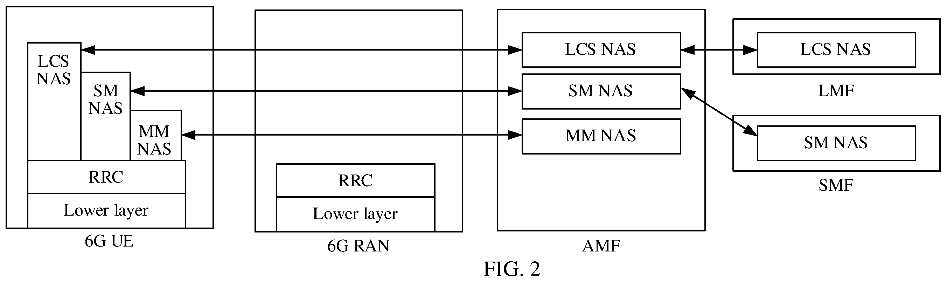

In an existing NAS transmission solution, as shown in FIG. 2, in a 5G system, an NAS connection is maintained between a UE and an AMF, and a mobility management (mobility management, MM) NAS message is transmitted. A RAN forwards the MM NAS message between the UE and the AMF. If the UE has another type of NAS request, for example, an NAS-SM, a short message service (short message service, SMS), a UE policy, and a location service (location service, LCS), the UE includes the corresponding request in an MM NAS message, and the RAN forwards the MM NAS message to the AMF. After receiving the MM NAS message, the AMF parses the corresponding request and sends the request to a corresponding network element. The NAS-SM is information/a message between the UE and an SMF and is used for PDU session management. The SMS is information/a message between the UE and a short message service function (short message service function, SMSF) and is used for short message transfer. The UE policy is information/a message between the UE and a PCF and is used for UE policy transfer. The LCS is information/a message between the UE and an LMF and is used for UE location management.

It should be understood that requests corresponding to the NAS-SM, the SMS, the UE policy, and the LCS are included in the MM NAS message, and are invisible to the RAN. The RAN forwards only the MM NAS message between the UE and the AMF.

For example, when the UE initiates a location service, the UE includes an LCS request, namely, a mobile originated location request (mobile originated location request, MO-LR Request), in an MM NAS message. The RAN forwards the MM NAS message to the AMF. After parsing the MM NAS message, the AMF selects the LMF and initiates a location request to the LMF, where the location request includes information in the MO-LR request.

For another example, when the UE initiates a session service, the UE includes a session request (PDU session establishment request) as an N1 SM container in an MM NAS message, and the RAN forwards the MM NAS message to the AMF. After parsing the MM NAS message, the AMF selects the SMF, and then initiates a create session management context request (create SM context request), including the PDU session establishment request, to the SMF.

In this application, NAS transmission of a terminal may be understood as control plane signaling transmission of the terminal.

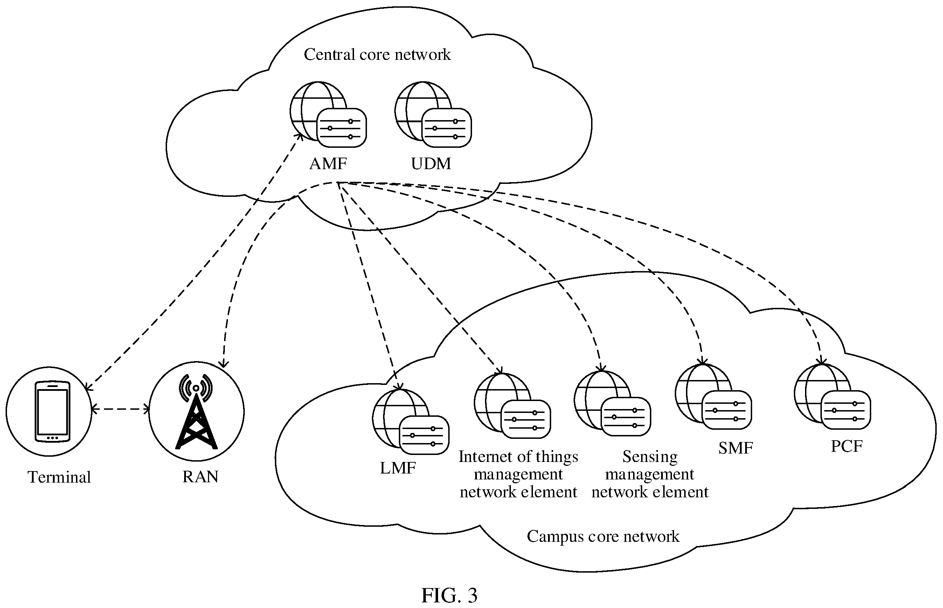

As shown in a 5G network architecture in FIG. 3, it can be learned that an AMF is located in a central core network, and other core network elements (such as an SMF, a PCF, an LMF, an internet of things management network element, and a sensing management network element) are located in a campus core network or a core network of a private network. The AMF functions as a transit for NAS signaling (such as an NAS-SM, an SMS, a UE policy, and an LCS). Interaction between a UE and other core network elements (such as the SMF, the PCF, the LMF, the internet of things management network element, and the sensing management network element) needs to depend on forwarding of the AMF. In campus or private network scenarios, signaling detour exists.

To solve this problem, the following provides another network architecture in the conventional technology.

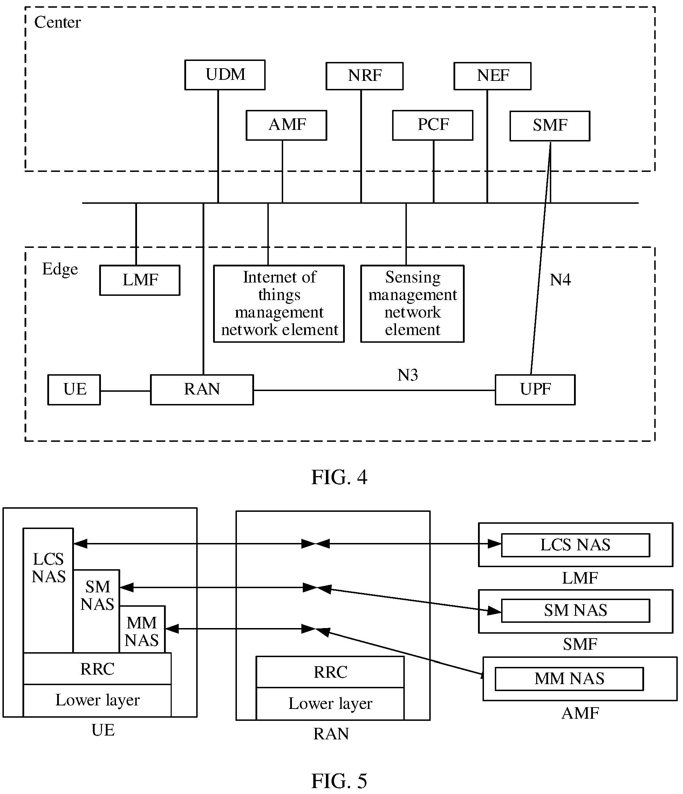

As shown in FIG. 4, in the network architecture, an NAS connection is directly established between a UE and service management function network elements (such as an SMF, an LMF, and a PCF), without the need for an AMF to participate in forwarding. This is denoted as a distributed NAS. FIG. 5 is a diagram of a distributed NAS. It can be learned that in the distributed NAS, a RAN needs to identify a type of an NAS message (for example, an NAS-SM, an SMS, a UE policy, or an LCS), and then forward the NAS message to a management function network element of a corresponding service.

For example, session services of UEs in a campus are processed only within the campus, and related data or signaling is not transmitted out of the campus. The RAN receives an access network message (access network message, AN message) including an SM NAS message (message) from the UE. If the RAN identifies that the NAS message is related to a session service, the RAN forwards the NAS message to a locally deployed SMF. The AN message is a message between the UE and the RAN.

For another example, location services of UEs in a campus are processed only within the campus, and related data or signaling is not transmitted out of the campus. The RAN receives an AN message including a location NAS message (Location NAS message) from the UE. If the RAN identifies that the NAS message is related to a location service, the RAN forwards the NAS message to a locally deployed LMF.

For another example, sensing services of UEs in a campus are processed only within the campus, and related data or signaling is not transmitted out of the campus. The RAN receives an AN message including a sensing NAS message (Sensing NAS message) from the UE. If the RAN identifies that the NAS message is related to a sensing service, the RAN forwards the NAS message to a locally deployed sensing management network element (sensing management function).

It can be learned that, in the network architecture, the RAN needs to support NAS routing, for example, identifying a type of an NAS message, and the RAN needs to support servitization, that is, service-based interfaces are used between the RAN and network elements. As a result, a boundary between the RAN and a core network is unclear.

For the foregoing technical problem, embodiments of this application provide the following technical solutions.

The following describes the technical solutions of this application with reference to accompanying drawings.

The technical solutions in embodiments of this application may be applied to various communication systems, for example, a wireless network (Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system like a long term evolution (long term evolution, LTE) system, a worldwide interoperability for microwave access (worldwide interoperability for microwave access, WiMAX) communication system, 5th generation (5th generation, 5G) like a new radio (new radio, NR) system, and a future communication system.

In embodiments of this application, "indicate" may include a direct indication and an indirect indication, or may include an explicit indication and an implicit indication. Information indicated by specific information (for example, the following first indication information, second indication information, or third indication information) is referred to as to-be-indicated information. In a specific implementation process, the to-be-indicated information is indicated in a plurality of manners, for example, but not limited to, the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may be identified and indicated in a unified manner, to reduce indication overheads caused by separately indicating same information.

Moreover, specific indication manners may alternatively be various existing indication manners, for example, but not limited to, the foregoing indication manners and various combinations thereof. For details of the various indication manners, refer to the conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can cause a to-be-indicated party to learn of to-be-indicated information.

It should be understood that the to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in embodiments of this application. The sending periodicities and/or the sending occasions of these pieces of sub-information may be predefined, for example, predefined according to a protocol, or may be configured by a transmit end device by sending configuration information to a receive end device.

"Predefinition" or "preconfiguration" may be implemented by prestoring corresponding code or a corresponding table in a device, or may be implemented in another manner that may indicate related information. A specific implementation thereof is not limited in embodiments of this application. "Storage" may be storage in one or more memories. The one or more memories may be separately disposed, or may be integrated into an encoder or a decoder, a processor, or a communication apparatus. Alternatively, some of the one or more memories may be separately disposed, and some of the one or more memories may be integrated into a decoder, a processor, or a communication apparatus. A type of the memory may be a storage medium in any form. This is not limited in embodiments of this application.

The "protocol" in embodiments of this application may be a protocol family in the communication field, a standard protocol with a frame structure similar to that of the protocol family, or a related protocol applied to a future communication system. This is not specifically limited in embodiments of this application.

In embodiments of this application, descriptions such as "when...", "in a case of...", and "if" all mean that a device performs corresponding processing in an objective case, and do not limit time, and the device is not required to perform a determining action during implementation. This does not mean that there is another limitation.

In descriptions of embodiments of this application, unless otherwise stated, "/" means an "or" relationship between associated objects. For example, A/B may indicate A or B. In embodiments of this application, "and/or" describes only an association relationship between associated objects, and indicates that three relationships may exist. For example, A and/or B may represent three cases: Only A exists, both A and B exist, and only B exists, where A and B may be singular or plural. In addition, in the descriptions of embodiments of this application, unless otherwise specified, "a plurality of" means two or more. "At least one of the following items (pieces)" or a similar expression thereof indicates any combination of these items, including any combination of singular items (pieces) or plural items (pieces). For example, at least one of a, b, or c may indicate a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to give an example, an illustration, or a description. Any embodiment or design solution described as an "example" or "for example" in embodiments of this application should not be explained as being more preferred or having more advantages than another embodiment or design solution. Exactly, use of the terms such as "example" or "for example" is intended to present a related concept in a specific manner for ease of understanding.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

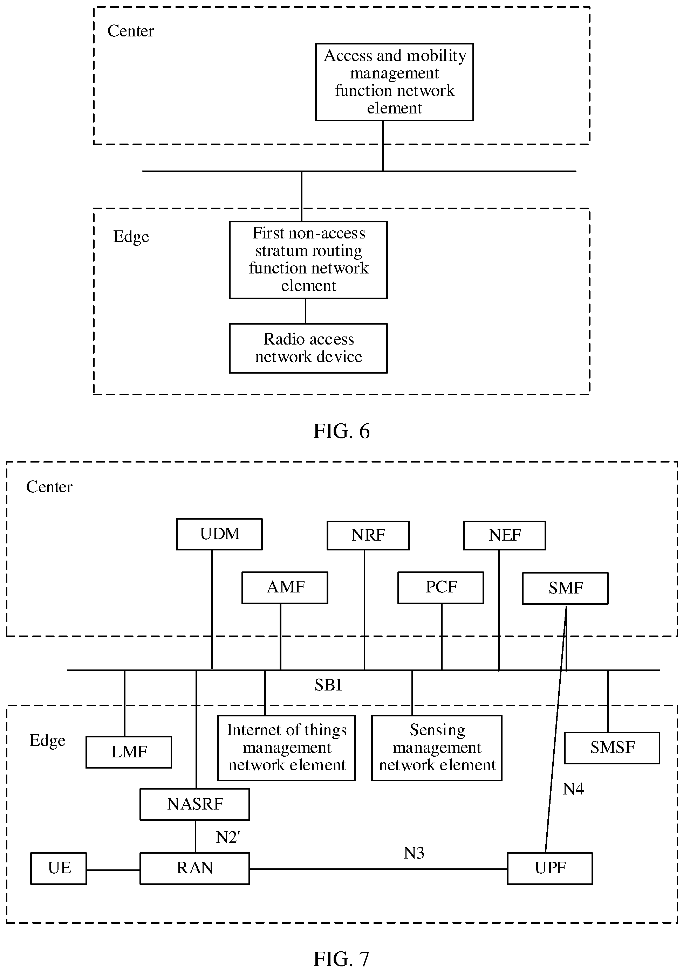

For ease of understanding of embodiments of this application, a communication system shown in FIG. 6 is first used as an example to describe in detail a communication system applicable to embodiments of this application. For example, FIG. 6 is a diagram of an architecture of a communication system to which a method according to an embodiment of this application is applicable.

As shown in FIG. 6, the communication system may include a radio access network device, a first non-access stratum routing function network element, and an access and mobility management function network element.

The radio access network device in this embodiment of this application may be the foregoing RAN device, and the radio access network device may be replaced with any other possible description. For example, in future communication, the radio access network device may be referred to as a radio access network function network element or an access network function network element, or any device, function, or entity that can implement an access network function may be understood as the radio access network device in this embodiment of this application.

The first non-access stratum routing function network element in this embodiment of this application may be a network element that can support an NAS routing function, for example, may be a non-access stratum routing function (NAS routing function, NASRF) network element, or may be replaced with any possible named network element/function/entity. An NASRF network element can identify a type of an NAS message and support NAS routing (routing the NAS message to a corresponding network element). The NASRF network element can be flexibly deployed in a campus (a network edge or a private network) or a central core network. The first non-access stratum routing function network element may be a network element that is different from the access and mobility management function network element and that can support the NAS routing function, for example, may be an NASRF network element. The first non-access stratum routing function network element is configured to forward a non-access stratum message to the access and mobility management function network element.

The access and mobility management function network element in this embodiment of this application may be the foregoing AMF network element, and the access and mobility management function network element may be replaced with any other possible description. For example, in future communication, the access and mobility management function network element may be referred to as an access management function network element or a registration management function network element, or any network element that can implement a function of the access and mobility management function network element in this embodiment of this application may be understood as the access and mobility management function network element in this embodiment of this application.

As shown in FIG. 7, the communication system may further include some or all of the following plurality of devices or network elements: a terminal UE, an SMF network element, a UPF network element, a PCF network element, an SMSF network element, and an LMF network element. There is an interface between a RAN device and the NASRF network element, and there are interfaces between the NASRF network element, the SMF network element, the PCF network element, the SMSF network element, and the LMF network element, for implementing distributed connection. The RAN does not need to be directly connected to an AMF network element, the SMF network element, the UPF network element, the PCF network element, the SMSF network element, and the LMF network element. The communication system may further include an internet of things management network element or a sensing management network element. There are interfaces between the NASRF network element and the internet of things management network element and between the NASRF network element and the sensing management network element.

In the communication system, a network element, for example, a non-access stratum routing function network element, whose function is to forward a non-access stratum message is defined in a network. The non-access stratum message may be transparently transmitted by the radio access network device to the non-access stratum routing function network element, and is further forwarded by the non-access stratum routing function network element, so that forwarding of the non-access stratum message no longer depends on the radio access network device or the access and mobility management function network element, and the non-access stratum message is decoupled from the radio access network device or the access and mobility management function network element. Therefore, a network architecture can be more flexible and can meet various service requirements in future network architectures. In addition, because the forwarding of the non-access stratum message no longer depends on the radio access network device or the access and mobility management function network element, load of the radio access network device or the access and mobility management function network element can be further reduced, thereby improving operation efficiency of the radio access network device or the access and mobility management function network element.

A device form of the network device is not limited in embodiments of this application. An apparatus configured to implement a function of the network device may be the network device, or may be an apparatus that can support the network device in implementing the function, for example, a chip system. The apparatus may be installed in the network device or used in cooperation with the network device. In embodiments of this application, the chip system may include a chip, or may include a chip and another discrete component.

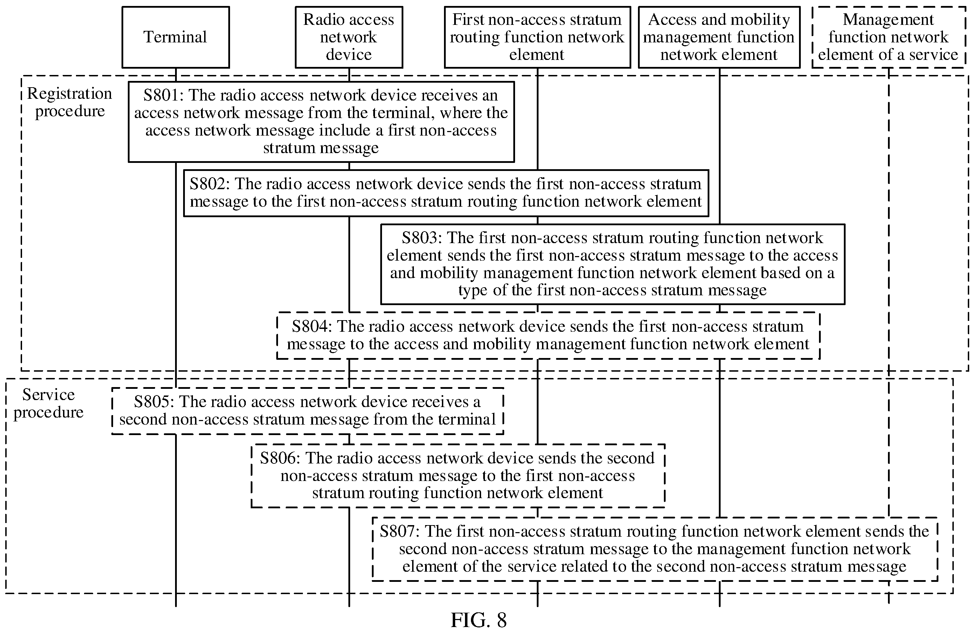

With reference to FIG. 8 to FIG. 10, the following specifically describes interaction procedures between network elements/devices in the foregoing communication system by using method embodiments. The information forwarding method provided in embodiments of this application is applicable to the foregoing communication system, and is specifically applied to various scenarios/procedures mentioned in the foregoing communication system. The following provides specific descriptions.

FIG. 8 is a schematic flowchart 1 of an information forwarding method according to an embodiment of this application. The information forwarding method is applicable to the foregoing communication system, and mainly relates to interaction between a radio access network device, a first non-access stratum routing function network element, and an access and mobility management function network element.

As shown in FIG. 8, a procedure of the information forwarding method is as follows:
S801: The radio access network device receives an access network message from a terminal, where the access network message may include a first non-access stratum message.

The access network message may be an access network message (AN message), the first non-access stratum message may be an NAS message, the first non-access stratum message is used by the terminal to request to register with a network, and the first non-access stratum message may be a registration request message. For example, the RAN device receives the AN message sent by the UE, where the AN message carries the registration request message. The registration request message may be a registration request message (registration request) defined in the conventional technology, or may be a newly defined message. This is not limited herein. The access network message in this embodiment of this application may alternatively be replaced with an access stratum message, a radio resource control (radio resource control, RRC) message, or the like that can implement a function of the access network message.

In a possible design solution, the access network message may further include first information, and the first information may include at least one of the following: an identifier of the first network or an identifier of a network slice of the terminal. The information forwarding method may further include: The radio access network device determines the first non-access stratum routing function network element based on the first information.

In this embodiment of this application, the network slice of the terminal may be a network slice that the terminal requests to access, and the network slice may provide a network service for the terminal. The identifier of the first network may be an identifier (identifier, ID) that can be used to uniquely determine the network, for example, may be a public land mobile network identifier (public land mobile network ID, PLMN ID). For example, the identifier of the first network may be a PLMN ID+NID, where the PLMN ID+NID indicates that the network is determined by using the PLMN ID and the network identifier (network identifier, NID). The identifier of the network slice of the terminal may be a network slice selection assistance information (network slice selection assistance information, NSSAI) identifier. The NSSAI identifier identifies the network slice, and may be used to help select the network slice. In other words, the network slice may be obtained through query based on the NSSAI identifier. The network slice that the terminal requests to access may be denoted as Requested NSSAI.

The radio access network device determines the first non-access stratum routing function network element based on the first information, and may specifically perform selection based on the identifier of the first network or the identifier of the network slice of the terminal in the following two selection manners:
Optionally, a first association relationship between different non-access stratum routing function network elements and different networks is configured in the radio access network device, and the first association relationship may indicate that different non-access stratum routing function network elements belong to different networks. The radio access network device determines, based on the identifier of the first network and the first association relationship, the first non-access stratum routing function network element associated with the first network.

For example, there may be at least one first association relationship, and each association relationship may include an identifier of a non-access stratum routing function network element and an identifier of a network to which the non-access stratum routing function network element belongs, to indicate an association between the non-access stratum routing function network element and the network. For example, the first association relationship includes an association relationship #1, an association relationship #2, and an association relationship #3. The association relationship #1 is {NASRF #1, PLMN #1}, the association relationship #2 is {NASRF #1, PLMN #2}, and the association relationship #3 is {NASRF #2, PLMN #3}. It can be learned that the same NASRF may be shared by different networks, or may be exclusively used by a network. This is not limited in a specific implementation. Certainly, implementations of the association relationships are merely some examples. For example, one network may include a plurality of NASRFs, and the RAN may perform selection based on priorities of the plurality of NASRFs, or may perform selection based on a current load status of each NASRF. This is not limited.

The radio access network device selects, based on the identifier of the first network, the first non-access stratum routing function network element that belongs to the first network. For example, one or more NASRF network elements are preconfigured in the RAN device, and different NASRF network elements belong to different PLMNs. The RAN device selects, based on PLMN ID information carried in the received AN message, an NASRF network element that belongs to a PLMN corresponding to the PLMN ID.

Optionally, a second association relationship between different non-access stratum routing function network elements and different network slices is configured in the radio access network device, and the second association relationship may indicate that different non-access stratum routing function network elements belong to different network slices. The radio access network device determines, based on the identifier of the network slice of the terminal and the second association relationship, the first non-access stratum routing function network element associated with the network slice of the terminal.

For example, there may be at least one second association relationship, and each association relationship may include an identifier of a non-access stratum routing function network element and an identifier of a network slice to which the non-access stratum routing function network element belongs, to indicate an association between the non-access stratum routing function network element and the network slice. For example, the second association relationship includes an association relationship #1, an association relationship #2, and an association relationship #3. The association relationship #1 is {NASRF #1, NSSAI #1}, the association relationship #2 is {NASRF #1, NSSAI #2}, and the association relationship #3 is {NASRF #2, NSSAI #3}. Certainly, implementations of the association relationships are merely some examples. For example, one network slice may correspond to a plurality of NASRFs, and the RAN may perform selection based on priorities of the plurality of NASRFs, or may perform selection based on a current load status of each NASRF. This is not limited.

The radio access network device selects, based on the identifier of the network slice of the terminal, the first non-access stratum routing function network element that belongs to the network slice of the terminal. For example, one or more NASRF network elements are preconfigured in the RAN device, and different NASRF network elements belong to different NSSAI. The RAN device selects, based on slice information (NSSAI info) carried in the received AN message, an NASRF network element that belongs to NSSAI corresponding to the NSSAI information.

In this way, corresponding non-access stratum routing function network elements are configured in different networks. The non-access stratum routing function network element in the corresponding network may be found based on the identifier of the first network and/or the identifier of the network slice of the terminal. The first non-access stratum routing function network element selected by the radio access network device belongs to the first network/the network slice that the terminal requests to access, so that a forwarding error of the non-access stratum message can be avoided.

In addition, after the radio access network device selects the first non-access stratum routing function network element, the radio access network device stores address information or identifier information of the first non-access stratum routing function network element associated with the terminal, for subsequent forwarding of a second non-access stratum message (refer to S806 and S807).

S802: The radio access network device sends the first non-access stratum message to the first non-access stratum routing function network element.

In a possible design solution, the access network message may further include the first information, and the first information may include at least one of the following: the identifier of the first network or the identifier of the network slice of the terminal. The information forwarding method may further include: The radio access network device sends the first non-access stratum message to the first non-access stratum routing function network element based on the first information. When the network slice of the terminal is a network slice of a private network or the first network is a private network, the radio access network device sends the first non-access stratum message to the first non-access stratum routing function network element.

It may be understood that the identifier of the first network included in the first information is an identifier of the first network that the terminal requests to access, and the identifier of the network slice of the terminal included in the first information is an identifier of the network slice that the terminal requests to access. The identifier of the first network herein may be a PLMN ID, or a PLMN ID+NID, and the PLMN ID+NID indicates that the network is determined by using the PLMN ID and the network identifier (network identifier, NID). If the network slice of the terminal is the network slice of the private network, or the first network is the private network, it indicates that the terminal requests to access the private network. When the terminal requests to access the private network, the first non-access stratum routing function network element is used to forward the first non-access stratum message. Optionally, an identifier of the network slice of the private network is preconfigured in the radio access network device. In this way, the radio access network device may determine that the identifier that is of the network slice of the terminal and that is in the access network message is the identifier of the network slice of the private network. Optionally, a network identifier of the private network is preconfigured in the radio access network device. In this way, the radio access network device may determine that the identifier of the first network in the access network message is the network identifier of the private network.

For example, NSSAI info or a PLMN ID (PLMN ID+NID) for which the NASRF network element needs to be used is preconfigured in the RAN device. Herein, the NSSAI info for which the NASRF network element needs to be used is slice information of the private network, and the PLMN ID, or the PLMN ID+NID for which the NASRF network element needs to be used is network identifier information of the private network. If the AN message received by the RAN device includes the slice information of the private network or the network identifier information of the private network, it indicates that the terminal requests to access the private network. The RAN device selects an NASRF network element based on the slice information of the private network or the network identifier information of the private network, and sends the NAS message in the AN message to the NASRF network element.

In this way, for different network types, an existing manner of forwarding the non-access stratum message by the access and mobility management function network element or a manner, newly defined in embodiments of this application, of forwarding the non-access stratum message by the non-access stratum routing function network element may be used, so that the manner is flexibly applicable to various actual network scenarios. In addition, there may be different forwarding paths for non-access stratum messages of a terminal accessing a private network and a terminal accessing a public network, and the first non-access stratum routing function network element is introduced only for the terminal accessing the private network, thereby avoiding introducing an additional transmission node and reducing overheads.

In a possible design solution, the information forwarding method may further include: The radio access network device determines an identifier of the access and mobility management function network element based on the first information. The radio access network device sends the identifier of the access and mobility management function network element to the first non-access stratum routing function network element. Specifically, the radio access network device may select the access and mobility management function network element based on identifier information of the network slice of the terminal. For example, a network slice list corresponding to the AMF network element is preconfigured, and NSSAI info carried in the NAS message received by the RAN device corresponds to the AMF network element. In this case, the RAN device sends the identifier (AMF ID) of the AMF network element to the NASRF network element, so that the NASRF network element receives the AMF ID from the RAN device, and forwards the NAS message to the AMF network element.

It may be understood that the first non-access stratum routing function network element may obtain the identifier of the access and mobility management function network element via the radio access network device, that is, the first non-access stratum routing function network element may directly forward the first non-access stratum message to the access and mobility management function network element without selecting the access and mobility management function network element, thereby reducing overheads and design complexity of the first non-access stratum routing function network element.

S803: The first non-access stratum routing function network element sends the first non-access stratum message to the access and mobility management function network element based on a type of the first non-access stratum message.

The first non-access stratum routing function network element may identify a type of a non-access stratum message, so that different types of non-access stratum messages may be forwarded to different service management function network elements. The first non-access stratum routing function network element receives the first non-access stratum message, identifies the type of the first non-access stratum message, and then sends the first non-access stratum message to the access and mobility management function network element. The type of the first non-access stratum message may alternatively be information carried in the NAS message. This is not limited herein.

For example, the NASRF network element receives the NAS message sent by the RAN device. If the NAS message is an MM NAS message, the NASRF network element forwards the NAS message to the AMF network element.

Optionally, S803 may further include: The first non-access stratum routing function network element receives the identifier of the access and mobility management function network element from the radio access network device. The first non-access stratum routing function network element sends the first non-access stratum message to the access and mobility management function network element based on the type of the first non-access stratum message and the identifier of the access and mobility management function network element. It may be understood that the first non-access stratum routing function network element may obtain the identifier of the access and mobility management function network element via the radio access network device, so that overheads and design complexity of the first non-access stratum routing function network element can be reduced.

In addition, the information forwarding method may further include optional steps S804 to S807, which are specifically as follows:
S804: The radio access network device sends the first non-access stratum message to the access and mobility management function network element.

Optionally, when the network slice of the terminal is a network slice of a public network or the first network is a public network, the radio access network device sends the first non-access stratum message to the access and mobility management function network element.

It may be understood that, if the network slice is the network slice of the public network or the network is the public network, it indicates that the terminal requests to access the public network. When the terminal requests to access the public network, the access and mobility management function network element is used to forward the first non-access stratum message.

For example, if the AN message received by the RAN device includes slice information of the public network or network identifier information of the public network, the RAN device determines that the NASRF network element does not need to be used, and then the RAN device selects the AMF network element, and sends the NAS message in the AN message to the AMF network element, so that the AMF network element processes or forwards the NAS message.

In this way, the non-access stratum routing function network element is introduced only for the terminal accessing the private network, and the access and mobility management function network element is used to forward the first non-access stratum message for the terminal accessing the public network, so as to avoid introducing an additional transmission node and reduce overheads.

S805: The radio access network device receives the second non-access stratum message from the terminal.

The second non-access stratum message may be a non-access stratum message related to a service of the terminal. The second non-access stratum message may include at least one of the following: a mobility management non-access stratum message, a session management non-access stratum message, or a location service non-access stratum message.

Optionally, the radio access network device receives the access network message from the terminal, where the access network message includes the second non-access stratum message.

It may be understood that the non-access stratum routing function network element may not only forward the non-access stratum message used for registration, but also forward the non-access stratum message related to the service. The second non-access stratum message may be a NAS message that is related to the service and that is sent by the terminal to the radio access network device after the terminal successfully registers with the network. The NAS message related to the service may be, for example, an MM NAS message (message), a session management (session management, SM) NAS message, or an LCS NAS message.

S806: The radio access network device sends the second non-access stratum message to the first non-access stratum routing function network element.

For example, the terminal sends an MM/SM/LCS NAS message to the RAN device, and the RAN device forwards the MM/SM/LCS NAS message of the terminal to an NASRF network element based on stored address information of the NASRF network element associated with the terminal.

It may be understood that, after the terminal successfully registers with the network, the radio access network device may forward the non-access stratum message related to the service of the terminal to the first non-access stratum routing function network element, and the first non-access stratum routing function network element forwards the non-access stratum message related to the service to a corresponding service management function network element. The radio access network device does not need to be directly connected to the service management function network element, and a non-access stratum connection between a user equipment and service management function network elements can be implemented without depending on the radio access network device supporting non-access stratum routing.

Optionally, when the terminal accesses the private network, the radio access network device sends the second non-access stratum message to the first non-access stratum routing function network element. When the terminal accesses the public network, the radio access network device sends the second non-access stratum message to the access and mobility management function network element.

For example, if the terminal accesses the private network, the terminal sends an MM/SM/LCS NAS message, and the RAN device forwards the NAS message to an NASRF network element based on stored address information of the NASRF network element associated with the terminal, so that the NASRF network element forwards the NAS message to a corresponding service management function network element based on a type of the NAS message (for example, an MM NAS, an LCS NAS, or an SM NAS). If the terminal accesses the public network, and the RAN device does not store address information of an NASRF network element associated with the terminal or the RAN device stores address information of the AMF network element associated with the terminal, the RAN device forwards the NAS message to the AMF network element, so that the AMF network element forwards the NAS message to a corresponding service management function network element based on a type of the NAS message.

S807: The first non-access stratum routing function network element sends the second non-access stratum message to the management function network element of the service related to the second non-access stratum message.

For example, the NASRF network element receives the NAS message from the RAN device, the NASRF network element selects a corresponding network element based on a type of the NAS message, and forwards the NAS message to a management function network element (an AMF/SMF/LMF) of a corresponding service. If the type of the NAS message is an LCS NAS, the NASRF network element selects the location network element LMF, and the NASRF network element forwards the NAS message to the LMF network element.

For another example, in S806, the RAN selects a management function network element (an AMF/SMF/LMF) of a corresponding service. The NASRF network element receives the NAS message from the RAN device and an identifier of the management function network element (the AMF/SMF/LMF) of the corresponding service, and the NASRF network element forwards the NAS message to the management function network element of the corresponding service. If the type of the NAS message is an LCS NAS, the RAN device selects the location network element LMF, and the NASRF network element forwards the NAS message to the LMF network element.

In conclusion, a network element, for example, the non-access stratum routing function network element, whose function is to forward the non-access stratum message is defined in the network. The non-access stratum message may be transparently transmitted by the radio access network device to the non-access stratum routing function network element, and is further forwarded by the non-access stratum routing function network element, so that forwarding of the non-access stratum message no longer depends on the radio access network device or the access and mobility management function network element, and the non-access stratum message is decoupled from the radio access network device or the access and mobility management function network element. Therefore, a network architecture can be more flexible and can meet various service requirements in future network architectures. In addition, because the forwarding of the non-access stratum message no longer depends on the radio access network device or the access and mobility management function network element, load of the radio access network device or the access and mobility management function network element can be further reduced, thereby improving operation efficiency of the radio access network device or the access and mobility management function network element.

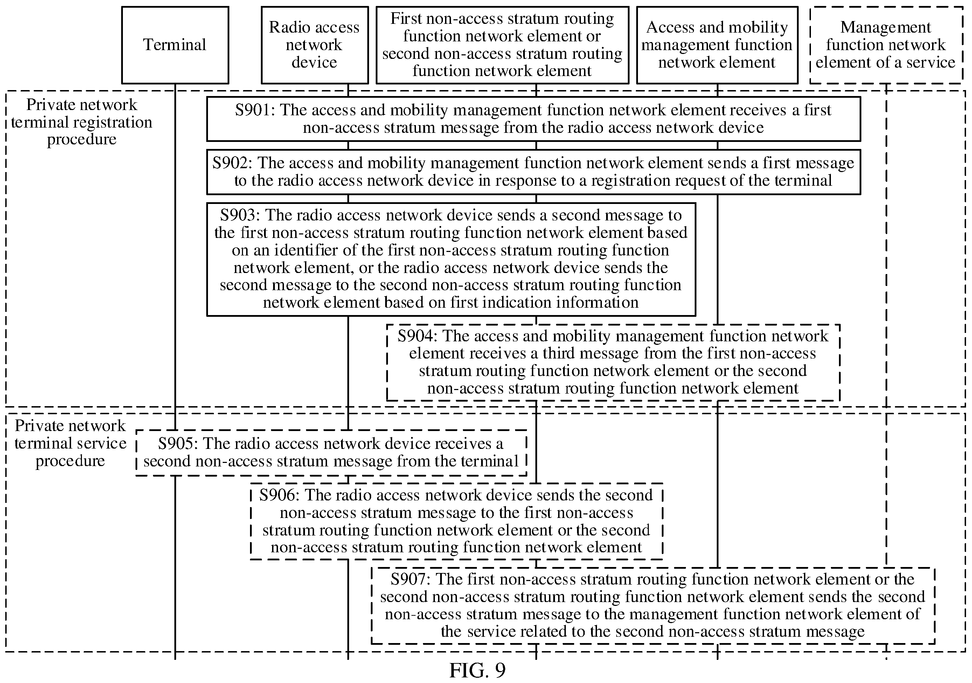

FIG. 9 is a schematic flowchart 2 of another information forwarding method according to an embodiment of this application. The information forwarding method is applicable to the foregoing communication system, and mainly relates to interaction between a radio access network device, a non-access stratum routing function network element, and an access and mobility management function network element.

As shown in FIG. 9, a procedure of the information forwarding method is as follows:
S901: The access and mobility management function network element receives a first non-access stratum message from the radio access network device.

The first non-access stratum message is used by a terminal to request to register with a first network.

The radio access network device receives an access network message from the terminal before S901, where the access network message includes the first non-access stratum message. The first non-access stratum message may be a registration request message. For example, the RAN device receives the AN message sent by the UE, where the AN message carries the registration request message. The registration request message may be a registration request message (registration request) defined in the conventional technology, or may be a newly defined message. This is not limited herein.

S902: The access and mobility management function network element sends a first message to the radio access network device in response to a registration request of the terminal.

The first message may include an identifier of a first non-access stratum routing function network element or first indication information. The first indication information indicates that the non-access stratum routing function network element needs to be selected. For example, the first indication information may be NASRF insertion indication information. It may be understood that the first indication information may be indication information indicating that the non-access stratum routing function network element is determined to be used and the radio access network device needs to select the non-access stratum routing function network element. The identifier of the first non-access stratum routing function network element may also indicate that the first non-access stratum routing function network element needs to be used. The access and mobility management function network element determines whether to use the non-access stratum routing function network element. If the non-access stratum routing function network element is determined to be used, the non-access stratum routing function network element supports routing and forwarding of the non-access stratum message.

Optionally, the first message may be an NG application protocol (NG Application Protocol, NGAP) message.

Optionally, the first non-access stratum message may include an identifier of a network slice of the terminal. S902 may further include: sending the first message to the radio access network device when the network slice of the terminal is a network slice of a private network; and/or sending the first message to the radio access network device when a location corresponding to location information of the terminal is in a private network area.

The location information of the terminal may be an identifier of a cell accessed by the terminal or an identifier of the radio access network device accessed by the terminal. The identifier of the network slice of the terminal may be a network slice selection assistance information (network slice selection assistance information, NSSAI) identifier, and the NSSAI identifier identifies the network slice.

For example, NSSAI info or location information for which the NASRF network element needs to be used is preconfigured in the AMF network element, and the AMF network element determines, based on the NSSAI info or the location information of the terminal, whether to use the NASRF network element to transmit an NAS message or control plane signaling of the terminal. The NSSAI info for which the NASRF network element needs to be used is slice information of the private network, and the location information for which the NASRF network element needs to be used is identifier information of a RAN or an identifier of a cell corresponding to the RAN. It may be understood that the NASRF network element is used only when NSSAI info carried in the NAS message received by the AMF network element is a network slice of a private network, or the terminal accesses a RAN deployed within a campus (private network).

It may be understood that, for different network types, an existing manner of forwarding the non-access stratum message or a manner, newly defined in embodiments of this application, of forwarding the non-access stratum message by the non-access stratum routing function network element may be used, so that the manner is flexibly applicable to various actual network scenarios. The access and mobility management function network element determines to use the non-access stratum routing function network element only when the terminal accesses the private network. In this way, the non-access stratum routing function network element is introduced only for the terminal that accesses the private network, to avoid introducing an additional transmission node and reduce overheads.

Optionally, the information forwarding method may further include: When the first message includes the identifier of the first non-access stratum routing function network element, the access and mobility management function network element determines the identifier of the first non-access stratum routing function network element based on the identifier of the network slice of the terminal.

It may be understood that for a specific manner of selecting the first non-access stratum routing function network element by the access and mobility management function network element, refer to S802. Details are not described herein. The radio access network device may obtain the identifier of the first non-access stratum routing function network element via the access and mobility management function network element. In other words, the radio access network device may directly send a message to the first non-access stratum routing function network element without selecting a non-access stratum routing function network element, thereby reducing overheads of the radio access network device.

Optionally, when a second message includes an identifier of the terminal, the first message may further include the identifier of the terminal. The identifier of the terminal may be a temporary identifier allocated by the access and mobility management function network element to the terminal, for example, may be an AMF UE NGAP ID or a UE temp ID. The AMF UE NGAP ID uniquely identifies a UE over an NG interface within an AMF range. The UE temp ID is a temporary identifier that uniquely identifies a terminal within an AMF range. The identifier of the terminal indicates that the first non-access stratum routing function network element is associated with the terminal and/or the access and mobility management function network element is associated with the terminal.

It may be understood that the access and mobility management function network element may associate the first non-access stratum routing function network element and the access and mobility management function network element with the terminal by using the identifier of the terminal. In an association case, the access and mobility management function network element and another service management function network element may process, in the forwarding manner defined in embodiments of this application, a non-access stratum message subsequently sent by the terminal, that is, forward the non-access stratum message via the first non-access stratum routing function network element.

S903: The radio access network device sends the second message to the first non-access stratum routing function network element based on the identifier of the first non-access stratum routing function network element; or
the radio access network device sends the second message to a second non-access stratum routing function network element based on the first indication information.

The second message may include an identifier of the access and mobility management function network element and/or the identifier of the terminal. The first non-access stratum routing function network element is a network element selected by the access and mobility management function network element, and the second non-access stratum routing function network element is a network element selected by the radio access network device. The first non-access stratum routing function network element and the second non-access stratum routing function network element may be a same network element, or may be different network elements. This is not limited herein. For a specific manner of selecting the non-access stratum routing function network element, refer to S802. Details are not described herein.

Optionally, the information forwarding method may further include: When the first message includes the first indication information, the radio access network device determines the second non-access stratum routing function network element.

It may be understood that, if the radio access network device receives the identifier of the first non-access stratum routing function network element, the radio access network device directly sends the second message to the first non-access stratum routing function network element; or if the radio access network device receives the first indication information, the radio access network device selects the non-access stratum routing function, and sends the second message to the selected second non-access stratum routing function network element.

For example, if the RAN device receives an NASRF ID from the AMF network element, the RAN device sends the second message to the NASRF network element, where the second message includes the AMF ID, the AMF UE NGAP ID, or the UE temp ID. If the RAN device receives the NASRF insertion indication information from the AMF network element, the RAN device first selects an NASRF network element, and then sends the second message to the selected NASRF network element.

Optionally, the radio access network device stores address information or identifier information of a non-access stratum routing function network element (the first non-access stratum routing function network element or the second non-access stratum routing function network element) associated with the terminal, for subsequent forwarding of the second non-access stratum message (refer to S905 and S906). For example, if the radio access network device sends the second message to the first non-access stratum routing function network element, the radio access network device stores address information or identifier information of the first non-access stratum routing function network element associated with the terminal. For another example, if the radio access network device sends the second message to the second non-access stratum routing function network element, the radio access network device stores address information or identifier information of the second non-access stratum routing function network element associated with the terminal.

In this way, the radio access network device autonomously selects the non-access stratum routing function network element, so that overheads and design complexity of the access and mobility management function network element can be reduced.

S904: The access and mobility management function network element receives a third message from the first non-access stratum routing function network element or the second non-access stratum routing function network element.

If the radio access network device sends the second message to the first non-access stratum routing function network element, the access and mobility management function network element receives the third message from the first non-access stratum routing function network element. If the radio access network device sends the second message to the second non-access stratum routing function network element, the access and mobility management function network element receives the third message from the second non-access stratum routing function network element. The third message may include the identifier of the terminal, and the identifier of the terminal indicates that the first non-access stratum routing function network element or the second non-access stratum routing function network element is associated with the terminal and/or the access and mobility management function network element is associated with the terminal.

The access and mobility management function network element may associate the non-access stratum routing function network element and the access and mobility management function network element with the terminal by using the identifier of the terminal. In an association case, when subsequently processing a non-access stratum message sent by the terminal, the access and mobility management function network element and another service management function network element may learn that the non-access stratum message is associated with the terminal, so that the non-access stratum message is processed in the forwarding manner defined in embodiments of this application, that is, the non-access stratum message is forwarded via the non-access stratum routing function network element.

For example, the NASRF network element sends the third message to the AMF network element based on the AMF ID in the second message, where the third message includes the AMF UE NGAP ID/UE temp ID. The AMF network element learns, based on the AMF UE NGAP ID/UE temp ID, the UE associated with the third message. When subsequently receiving an NAS message sent by the UE, the AMF network element forwards the NAS message via the NASNF network element associated with the UE.

S905: The radio access network device receives the second non-access stratum message from the terminal.

The second non-access stratum message may be a non-access stratum message related to a service of the terminal.

S906: The radio access network device sends the second non-access stratum message to the first non-access stratum routing function network element or the second non-access stratum routing function network element.

Herein, when the radio access network device sends the second message to the first non-access stratum routing function network element in S903, the radio access network device sends the second non-access stratum message to the first non-access stratum routing function network element; or when the radio access network device sends the second message to the second non-access stratum routing function network element in S903, the radio access network device sends the second non-access stratum message to the second non-access stratum routing function network element.

The second non-access stratum message may include at least one of the following: a mobility management non-access stratum message, a session management non-access stratum message, or a location service non-access stratum message.

S907: The first non-access stratum routing function network element or the second non-access stratum routing function network element sends the second non-access stratum message to a management function network element of the service related to the second non-access stratum message.

A specific implementation principle of S905 to S907 is similar to that of S805 to S807, and reference may be made for understanding. Details are not described herein again.

In conclusion, based on definition of the non-access stratum routing function network element, the access and mobility management function network element may trigger the non-access stratum routing function network element to forward a corresponding non-access stratum message, so that the non-access stratum message is decoupled from the radio access network device or the access and mobility management function network element. Therefore, a network architecture can be more flexible and is applicable to various service requirements in future network architectures.

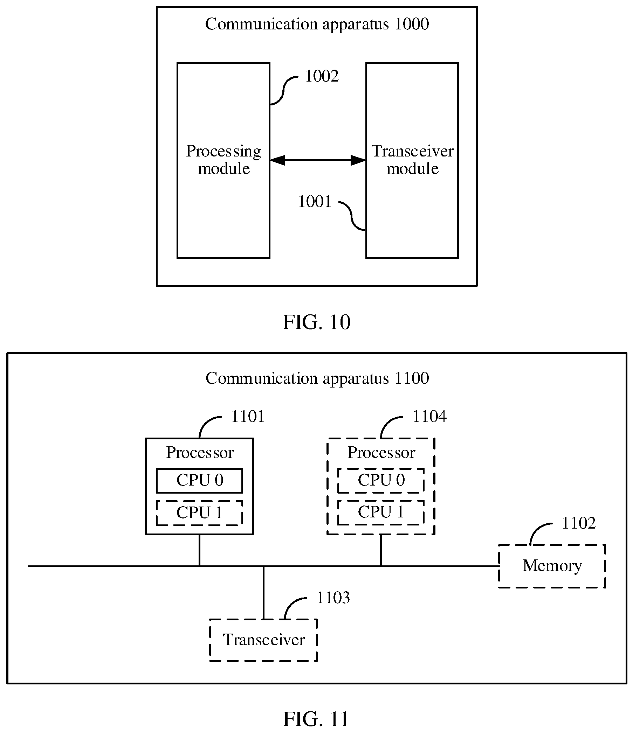

The foregoing describes in detail the methods provided in embodiments of this application with reference to FIG. 8 to FIG. 9. The following describes in detail, with reference to FIG. 10 and FIG. 11, communication apparatuses configured to perform the information forwarding methods provided in embodiments of this application.

FIG. 10 is a diagram 1 of a structure of a communication apparatus according to an embodiment of this application. For example, as shown in FIG. 10, the communication apparatus 1000 includes a transceiver module 1001 and a processing module 1002. For ease of description, FIG. 10 shows only main parts of the communication apparatus.

The transceiver module 1001 is configured to perform receiving and sending functions in the method shown in FIG. 8, and the processing module 1002 is configured to perform another function other than the receiving and sending functions in the method shown in FIG. 8.

Optionally, the transceiver module 1001 may include a sending module (not shown in FIG. 10) and a receiving module (not shown in FIG. 10). The sending module is configured to implement a sending function of the communication apparatus 1000, and the receiving module is configured to implement a receiving function of the communication apparatus 1000.

Optionally, the communication apparatus 1000 may further include a storage module (not shown in FIG. 10). The storage module stores a program or instructions. When the processing module 1002 executes the program or the instructions, the communication apparatus 1000 is enabled to perform a function of the terminal or the network device in the method shown in FIG. 8 in the foregoing methods.

It may be understood that the communication apparatus 1000 may be a terminal or a network device, may be a chip (system) or another part or component that may be disposed in a terminal or a network device, or may be an apparatus that includes a terminal or a network device. This is not limited in this application.

In addition, for technical effects of the communication apparatus 1000, refer to the technical effects of the information forwarding methods shown in FIG. 8 and FIG. 9. Details are not described herein again.

FIG. 11 is a diagram 2 of a structure of a communication apparatus according to an embodiment of this application. For example, the communication apparatus may be a terminal, or may be a chip (system) or another part or component that may be disposed in the terminal. As shown in FIG. 11, the communication apparatus 1100 may include a processor 1101. Optionally, the communication apparatus 1100 may further include a memory 1102 and/or a transceiver 1103. The processor 1101 is coupled to the memory 1102 and/or the transceiver 1103. For example, the processor 1101 may be connected to the memory 1102 and/or the transceiver 1103 through a communication bus, through an intra-chip interface, or through another communication line. Optionally, the memory 1102 may be integrated with the processor 1101.

The following describes parts of the communication apparatus 1100 in detail with reference to FIG. 11.

The processor 1101 is a control center of the communication apparatus 1100, and may be a processor, or may be a collective term of a plurality of processing elements. For example, the processor 1101 is one or more central processing units (central processing units, CPUs), or may be an application-specific integrated circuit (application-specific integrated circuit, ASIC), or may be one or more integrated circuits configured to implement embodiments of this application, for example, one or more microprocessors (digital signal processors, DSPs) or one or more field programmable gate arrays (field programmable gate arrays, FPGAs).

Optionally, the processor 1101 may run or execute a software program stored in the memory 1102 and invoke data stored in the memory 1102, to perform various functions of the communication apparatus 1100, for example, perform the information forwarding method shown in FIG. 8.

During specific implementation, in an embodiment, the processor 1101 may include one or more CPUs, for example, a CPU 0 and a CPU 1 shown in FIG. 11.

During specific implementation, in an embodiment, the communication apparatus 1100 may alternatively include a plurality of processors, for example, the processor 1101 and a processor 1104 shown in FIG. 11. Each of the processors may be a single-core processor (single-CPU), or may be a multi-core processor (multi-CPU). The processor herein may be one or more devices, circuits, and/or processing cores configured to process data (for example, computer program instructions).

The memory 1102 is configured to store a software program for performing the solutions of this application, and the processor 1101 controls execution. For a specific implementation, refer to the foregoing method embodiments. Details are not described herein again.

Optionally, the memory 1102 may be a read-only memory (read-only memory, ROM) or another type of static storage device that can store static information and instructions, or may be a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this is not limited. The memory 1102 may be integrated with the processor 1101, or may exist independently and is coupled to the processor 1101 through an interface circuit (not shown in FIG. 11) of the communication apparatus 1100. This is not specifically limited in this embodiment of this application.

The transceiver 1103 is configured to communicate with another communication apparatus. For example, the communication apparatus 1100 is a terminal, and the transceiver 1103 may be configured to communicate with a network device or another terminal device. For another example, the communication apparatus 1100 is a network device, and the transceiver 1103 may be configured to communicate with a terminal or another network device.

Optionally, the transceiver 1103 may include a receiver and a transmitter (not separately shown in FIG. 11). The receiver is configured to implement a receiving function, and the transmitter is configured to implement a sending function.

Optionally, the transceiver 1103 may be integrated with the processor 1101, or may exist independently and is coupled to the processor 1101 through an interface circuit (not shown in FIG. 11) of the communication apparatus 1100. This is not specifically limited in this embodiment of this application.

It may be understood that the structure of the communication apparatus 1100 shown in FIG. 11 does not constitute a limitation on the communication apparatus. An actual communication apparatus may include more or fewer parts than those shown in the figure, or combine some parts, or have different part arrangements.

In addition, for technical effects of the communication apparatus 1100, refer to the technical effects of the methods in the foregoing method embodiments. Details are not described herein again.

It should be understood that, the processor in this embodiment of this application may be a central processing unit (central processing unit, CPU), or the processor may be another generalpurpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The generalpurpose processor may be a microprocessor, or the processor may be any conventional processor or the like.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, random access memories (random access memories, RAMs) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When the software is used to implement the embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a generalpurpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof indicates any combination of these items, including any combination of singular items (pieces) or plural items (pieces). For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

## Claims

1. An information forwarding method, comprising:
receiving, by a radio access network device, an access network message from a terminal, wherein the access network message comprises a first non-access stratum message, and the first non-access stratum message is used by the terminal to request to register with a first network; and
sending, by the radio access network device, the first non-access stratum message to a first non-access stratum routing function network element, wherein the first non-access stratum routing function network element is different from an access and mobility management function network element, and is configured to forward the first non-access stratum message to the access and mobility management function network element, and the access and mobility management function network element is responsible for processing a registration request of the terminal.

2. The method according to claim 1, wherein the access network message further comprises first information, the first information comprises at least one of the following: an identifier of the first network or an identifier of a network slice of the terminal, and the method further comprises:
determining, by the radio access network device, the first non-access stratum routing function network element based on the first information.

3. The method according to claim 2, wherein a first association relationship between different non-access stratum routing function network elements and different networks is configured in the radio access network device, the first association relationship indicates that different non-access stratum routing function network elements belong to different networks; and the determining, by the radio access network device, the first non-access stratum routing function network element based on the first information comprises:
determining, by the radio access network device based on the identifier of the first network and the first association relationship, the first non-access stratum routing function network element associated with the first network.

4. The method according to claim 2, wherein a second association relationship between different non-access stratum routing function network elements and different network slices is configured in the radio access network device, the second association relationship indicates that different non-access stratum routing function network elements belong to different network slices; and the determining, by the radio access network device, the first non-access stratum routing function network element based on the first information comprises:
determining, by the radio access network device based on the identifier of the network slice of the terminal and the second association relationship, the first non-access stratum routing function network element associated with the network slice of the terminal.

5. The method according to claim 1, wherein the access network message further comprises first information, the first information comprises at least one of the following: an identifier of the first network or an identifier of a network slice of the terminal, and the method further comprises:
sending, by the radio access network device, the first non-access stratum message to the first non-access stratum routing function network element based on the first information.

6. The method according to claim 5, wherein the sending, by the radio access network device, the first non-access stratum message to the first non-access stratum routing function network element based on the first information further comprises:
when the network slice of the terminal is a network slice of a private network or the first network is a private network, sending, by the radio access network device, the first non-access stratum message to the first non-access stratum routing function network element.

7. The method according to claim 5, wherein the method further comprises:
when the network slice of the terminal is a network slice of a public network or the first network is a public network, sending, by the radio access network device, the first non-access stratum message to the access and mobility management function network element.

8. The method according to claim 2, wherein the method further comprises:
determining, by the radio access network device, an identifier of the access and mobility management function network element based on the first information; and
sending, by the radio access network device, the identifier of the access and mobility management function network element to the first non-access stratum routing function network element.

9. The method according to any one of claims 1 to 8, wherein the method further comprises:
receiving, by the radio access network device, a second non-access stratum message from the terminal, wherein the second non-access stratum message is a non-access stratum message related to a service of the terminal; and
sending, by the radio access network device, the second non-access stratum message to the first non-access stratum routing function network element, wherein
the second non-access stratum message comprises at least one of the following: a mobility management non-access stratum message, a session management non-access stratum message, or a location service non-access stratum message.

10. An information forwarding method, comprising:
receiving, by a first non-access stratum routing function network element, a first non-access stratum message from a radio access network device, wherein the first non-access stratum message is used by a terminal to request to register with a first network, the first non-access stratum routing function network element is different from an access and mobility management function network element, and the access and mobility management function network element is responsible for processing a registration request of the terminal; and
sending, by the first non-access stratum routing function network element, the first non-access stratum message to the access and mobility management function network element based on a type of the first non-access stratum message.

11. The method according to claim 10, wherein the sending, by the first non-access stratum routing function network element, the first non-access stratum message to the access and mobility management function network element based on the type of the first non-access stratum message comprises:
receiving, by the first non-access stratum routing function network element, an identifier of the access and mobility management function network element from the radio access network device; and
sending, by the first non-access stratum routing function network element, the first non-access stratum message to the access and mobility management function network element based on the type of the first non-access stratum message and the identifier of the access and mobility management function network element.

12. The method according to claim 10 or 11, wherein the method further comprises:
receiving, by the first non-access stratum routing function network element, a second non-access stratum message from the radio access network device, wherein the second non-access stratum message is a non-access stratum message related to a service of the terminal; and
sending, by the first non-access stratum routing function network element, the second non-access stratum message to a management function network element of the service related to the second non-access stratum message, wherein
the second non-access stratum message comprises at least one of the following: a mobility management non-access stratum message, a session management non-access stratum message, or a location service non-access stratum message.

13. An information forwarding method, comprising:
receiving, by an access and mobility management function network element, a first non-access stratum message from a radio access network device, wherein the first non-access stratum message is used by a terminal to request to register with a first network; and
sending, by the access and mobility management function network element, a first message to the radio access network device in response to a registration request of the terminal, wherein the first message comprises an identifier of a first non-access stratum routing function network element or first indication information, the first indication information indicates that a non-access stratum routing function network element needs to be selected, and the non-access stratum routing function network element is a network element that is different from the access and mobility management function network element and that is configured to forward a non-access stratum message.

14. The method according to claim 13, wherein the first non-access stratum message comprises an identifier of a network slice of the terminal; and the sending, by the access and mobility management function network element, the first message to the radio access network device in response to the registration request of the terminal further comprises:
sending the first message to the radio access network device when the network slice of the terminal is a network slice of a private network; and/or
sending the first message to the radio access network device when a location corresponding to location information of the terminal is in a private network area.

15. The method according to claim 13, wherein the first message further comprises an identifier of the terminal, and the method further comprises:
receiving, by the access and mobility management function network element, a second message from the first non-access stratum routing function network element, wherein the second message comprises the identifier of the terminal, and the identifier of the terminal indicates that the first non-access stratum routing function network element is associated with the terminal and/or the access and mobility management function network element is associated with the terminal.

16. The method according to claim 13, wherein when the first message comprises the identifier of the first non-access stratum routing function network element, the method further comprises:
determining, by the access and mobility management function network element, the identifier of the first non-access stratum routing function network element based on an identifier of a network slice of the terminal.

17. An information forwarding method, comprising:
receiving, by a radio access network device, a first message from an access and mobility management function network element, wherein the first message comprises an identifier of a first non-access stratum routing function network element or first indication information, the first indication information indicates that a non-access stratum routing function network element needs to be selected, the non-access stratum routing function network element is configured to forward a non-access stratum message, and the access and mobility management function network element is responsible for registration or access management of a terminal; and
sending, by the radio access network device, a second message to the first non-access stratum routing function network element based on the identifier of the first non-access stratum routing function network element, or sending, by the radio access network device, the second message to a second non-access stratum routing function network element based on the first indication information, wherein the second message comprises an identifier of the access and mobility management function network element and/or an identifier of the terminal, and the identifier of the terminal indicates that the non-access stratum routing function network element is associated with the terminal and/or the access and mobility management function network element is associated with the terminal.

18. The method according to claim 17, wherein the method further comprises:
when the first message comprises the first indication information, determining, by the radio access network device, the second non-access stratum routing function network element.

19. The method according to claim 17, wherein when the second message comprises the identifier of the terminal, the first message further comprises the identifier of the terminal.

20. The method according to claim 17, wherein the method further comprises:
receiving, by the radio access network device, a second non-access stratum message from the terminal, wherein the second non-access stratum message is a non-access stratum message related to a service of the terminal; and
sending, by the radio access network device, the second non-access stratum message to the first non-access stratum routing function network element or the second non-access stratum routing function network element, wherein
the second non-access stratum message comprises at least one of the following: a mobility management non-access stratum message, a session management non-access stratum message, or a location service non-access stratum message.

21. A communication apparatus, wherein the apparatus comprises a module configured to perform the method according to any one of claims 1 to 20.

22. A communication apparatus, wherein the communication apparatus comprises a processor and a memory, the memory is configured to store computer instructions, and when the processor executes the instructions, the method according to any one of claims 1 to 20 is performed.

23. A computer-readable storage medium, wherein the computer-readable storage medium comprises a computer program or instructions, and when the computer program or the instructions are run on a computer, the computer is caused to perform the method according to any one of claims 1 to 20.
